# EUROPEAN PATENT SPECIFICATION

(11) **EP 2 225 185 B1**
(45) Date of publication and mention of the grant of the patent: **31.07.2013**
(21) Application number: 08859877.6
(22) Date of filing: 09.12.2008
(51) Int. Cl.: C04B 24/10, C04B 38/10, C04B 28/14, G10K 11/162

(54) **SOUND-ABSORBING, RESISTANT PANELS AND PROCESS FOR MAKING SAME**
SCHALLABSORBIERENDE, BESTÄNDIGE PANEELE UND HERSTELLUNGSVERFAHREN DAFÜR
PANNEAUX RÉSISTANTS, ABSORBANT LE SON ET LEUR PROCÉDÉ DE FABRICATION

(30) Priority: 10.12.2007 EP 07356174
(43) Date of publication of application: 08.09.2010
(73) Proprietor: SINIAT S.A., 84000 Avignon (FR)
(72) Inventor: THOUILLEUX, Philippe, F-38080 L'Isle d'Abeau (FR); STOCK, Claude, F-38460 Soleymieu (FR); YZIQUEL, Florence, F-13160 Chateaurenard (FR); JEZEQUEL, Pierre-Henri, F-69001 Lyon (FR)
(74) Representative: August & Debouzy avocats
(86) International application number: PCT/IB2008/003757
(87) International publication number: WO 2009/074875

(56) References cited:
- US-A- 4 565 647
- US-A1- 2004 231 916

## Description

The present invention relates to sound-absorbing panels and to a process for making the same, as well as to a composition useful for making the abovementioned sound-absorbing panels.

Compositions of set hydraulic binders have been increasingly used in combination with other materials to form composite structures. These structures typically comprise layers of differing thicknesses of compositions of set hydraulic binders and a wide variety of fibrous materials. When the fibrous materials are formed into a sheet material and placed on the outer surface of the set hydraulic binder composition it is referred to as a facer. When the fibrous material surrounds the composition of set hydraulic binder, the interior element is referred to as a core.

Panels (or boards), generally comprise of two sheets of a facer material having a certain tensile strength, like paper, covering a core based on a set hydraulic binder, notably gypsum plaster. Other types of panels do not necessarily have a facer in particular those used for acoustic insulation which are moulded into shaped articles.

In both cases, it is desirable to lighten the core by for example incorporating air into the slurry used for making the core. The incorporated air in the core could appear in the form of bubbles. Increasing the amount of air until percolation is known to improve the acoustic absorption properties of the boards, but also to deteriorate the mechanical resistance.

Therefore, it is difficult to produce a board having both sound-absorbing and mechanical satisfactory characteristics.

Consequently, there is a need for boards, and a method of producing boards, in particular gypsum boards, which have satisfactory properties both in terms of acoustics and mechanics.

There is thus still a need for boards based on a set hydraulic binder which are both sound absorbing and resistant to compression.

### SUMMARY OF THE INTENTION

It is a first object of the invention to provide a sound absorbing panel with a care comprising at least
- a set set gypsum plaster; and a glycoside compound as the sole
- foaming agent
   and having
- a porosity ≥ 0.55;
- a flow resistivity between 10000 and 200000 N.s.m⁻⁴;
- a tortuosity between 1.2 and 3.4;
- a viscous characteristic length between 10 µm and 60 µm;
- a thermal characteristic length between 60 µm and 1000 µm.
   and having
- a compressive strength of at least 0.30 MPa as measured by modified ASTM C472.

The invention also relates to a process of making a sound-absorbing panel, comprising the steps of:
a) pre-mixing the set hydraulic binder with water;
b) adding a glycoside compound;
c) injecting air into the obtained slurry of the step b) and mixing.
d) casting the aerated slurry;
e) setting the cast slurry.

The invention relates to an assembly comprising at least the panel according to the invention, a coating and a fixing system. And finally the invention relates to a partition comprising at least one frame, at least one any known gypsum board and at least one panel according to claims 1 to 8.

The present invention enables one to overcome the inconveniences cited-above. In particular the invention provides boards based on a set hydraulic binder and being both sound absorbing and resistant to compression.

According to particular embodiments, the invention also has the following advantageous features:
- Use could be made of foaming agent derived from renewable raw materials (for example namely glucoside derived for example from corn or potato starch and natural fatty alcohols derived for example from coconut or palm kernel oil);
- The good sound absorbing performance of the objects according to the invention make them useful for acoustic application;
- Besides the compressive strength in the core of the panels according to the invention results in an improved handling. The compressive strength is also important during transportation and mounting. The facer covering the core of panels (if present) provides most of the flexural strength as long as the core does not collapse. The high compressive strength of the acoustic core of the invention provides panels that have an improved rigidity during handling and that are more resistant when supported on conventional screws.
- Surprisingly, the composition of the invention does not enhance mould growth on the surface even after inoculation. Thus, the invention substantially avoids the specific addition of fungicides, which are often expensive and which may present health concerns.
- The compressive strength in the core of the panels according to the invention results in an improved resistance to surface imperfections. In particular, the acoustic ceiling application is frequently illuminated by low angle light. Impressions in the face panels create unsightly shadows in the ceiling that are unsatisfactory for architects and interior design specialists. Such defects may be reduced owing to the invention.

By the expression "sound-absorbing panel", it must be understood an acoustically absorbent porous panel. That means a panel able to dissipate the sound energy inside the porous structure of the panel.

### Ingredients used in the invention

The composition or the slurry comprises a set hydraulic binder. The set gypsum plaster is a material that will set with water. It is a hydratable calcined gypsum, referred to as plaster, stucco, calcium sulfate hemi hydrate, or calcium sulfate semi-hydrate (or alternatively anhydrite). The source of the gypsum before it is calcined by any method known to one skilled in the art may be natural or synthetic production of gypsum, synthetic production of gypsum is preferred.

Hydratable calcined gypsum material is generally a fine-grained powder with a median particle size in the range of 5 to 100 µm. Specific embodiments of the invention are particularly designed for quick-setting hydraulic binder, having a setting time of less than 30 min, preferably less than 20 min, more preferably less than 10 min. One of the most preferred set hydraulic binder for use in the present composition of the invention is hydratable flue gas desulfurization (FGD) plaster.

The advantages of FGD gypsum plaster are among others higher purity, more uniform and finer particles size, lighter color and no abrasive particles. Higher purity results in more set hydraulic binder per unit weight for generally improved strength over natural gypsum plaster of lower purity. Uniform fine particles are more uniformly and completely calcined for a more uniform setting time. Lighter color is more aesthetically pleasing. The lack of abrasive particles in the gypsum plaster causes less wear on conveying equipment and mixer parts.

The slurry comprises water. The final water-to-plaster (W/P) ratio in the slurry prior to setting is preferably comprised between 0.3 and 0.9, more preferably between 0.45 and 0.75 and most preferably between 0.55 and 0.65.

The composition or the slurry comprises a foaming agent.

By foaming agent according to the invention, it must be understood a glycoside compound or any surfactant able to foam a composition comprising gypsum plaster

Suitable foaming agents according to the invention are preferably alkylpolysaccharides.

Alkylpolysaccharides as foaming agents suitable for the invention, are those having a hydrophobic group containing from 8 to 22 carbon atoms, preferably from about 10 to about 16 carbon atoms, most preferably from 12 to 14 carbon atoms, and a polysaccharide hydrophilic group containing from 1 to 10, saccharide units (e.g., galactoside, glucoside, fructoside, glucosyl, fructosyl and/or galactosyl units).

Preferably, alkylpolysaccharides as foaming agents suitable for the invention, are alkylpolyglucosides having from 4 to 22, preferably from 4 to 16, more preferably from 8 to 12 carbon atoms.

The term glycoside compound according to the invention means any chemical compound comprising a sugar part (glycone) bound to a non-sugar part (aglycone). The glycone may comprise one or more sugar units. If more than one unit is present on average, the glycoside compound may be termed polyglycoside. The glycoside compound may be a (poly)fructoside compound (if the glycone is based on fructose), a (poly)galactoside compound (if the glycone is based on galactose), a (poly)glucoronide compound (if the glycone is based on glucoronic acid) etc. Preferably, the glycoside compound is a glucoside or polyglucoside, i.e. a glycoside based on glucose.

The glycoside compound may also be an alkylpolysaccharide having the general formula RO(R¹O)ₜZₓ as defined in US 4,565,647 on col.1, 1.36-55, and more particularly an alkylpolysaccharide as described in US 4,565,647 on col.2, 1.25-col.3, 1.57, notably a compound having the general formula R²O (CₙH₂ₙO)ₜ(Z)ₓ.

According to one embodiment of the invention, the general formula of the foaming agent is : R-O-(C₆H₂₀O₅)ₙ-OH wherein R is an alkyl group with 4 to 22 carbon atoms; and n is an integer from 1 to 3, preferably 1 to 2.

Preferably, R is an alkyl group with 8 to 12 carbon atoms.

Molecules made by Cognis in the GLUCOPON family are particularly well-suited, notably GLUCOPON 600 CSUP or GLUCOPON 215 CS UP.

Examples of foaming agents useful for the invention are alkylpolyglucosides, alkylpolysaccharides.

The glycoside compound mentioned above is the sole foaming agent or surfactant used in the composition or slurry according to the invention. In other terms, the composition or the slurry preferably does not substantially comprise any other foaming agent or surfactant. In one embodiment, the glycoside compound represents more than 90% of any surfactant composition, advantageously more than 95%, by weight. In one embodiment, there is no other surfactant or foaming agent. It is to be understood that the absence of any other foaming agent or surfactant also covers the case where there are less than 0.01 wt% (preferably less than 0.001 wt%) of other foaming agent(s) or surfactant(s) in the composition.

The composition or the slurry of the present invention comprises preferably from 0.1 to 2.0 wt% (% by weight of the weight of the hydraulic binder) of the glycoside compound (which is also meant to cover mixtures of several glycoside compounds), particularly from 0.25 to 0.8 wt% glycoside compound, more particularly from 0.30 to 0.60 wt% glycoside compound, and preferably from 0.35 to 0.50 wt% glycoside compound (% by weight of the weight of the set hydraulic binder).

The composition or the slurry of the present invention may also comprise aggregates and/or fillers and / or other inorganic materials. Examples of fillers are fumed silica, fly ash, blast furnace slag, micro-silica and fine limestone. Examples of likely aggregates are lightweight vermiculite, silica, limestone sand, perlite, microspheres, and expanded shale.

Additives influencing the behavior of the composition or slurry like retarders/accelerators pairs are advantageously used in the present invention. An example of a retarder/accelerator pair is conventional protein plaster retarder/ball milled accelerator (BMA).

It should be understood that any additive classically used in the art could also be used in the instant composition or slurry, in particular additives like thickeners or viscosity modifiers or fluidizers but not limited to them. The range of additives is very wide as will be appreciated by the skilled person.

Resins for the improvement of the mechanical and/or aesthetic properties, known in the art can be added to the composition or slurry of the present invention. Examples of resins beneficial alone or in combination are: polyacrylic, polyvinylalcohol, fluoropolymer and mixtures thereof. These types of resins can by combined in copolymers or other combinations, e.g. as styrene-butadiene copolymers, styrene-acrylate copolymers, vinyl-acetate-ethylene copolymers and acrylate copolymers.

The composition or slurry of the present invention may also comprise a thickener (also named stabilizing agent). The thickener may be effective by increasing the viscosity of the water in the matrix, or by stabilizing the bubble formation by the foaming agent. One skilled in the art will appreciate that polyvinyl alcohol is a suitable bubble stabilizing agent.

The composition or slurry of the present invention may also comprise a viscosity modifier like for example a water-soluble viscosity modifier. Examples are polymers (cellulosic, polyalcohol, polyurethane, polyester, polyether, polyacrylic, co- and terpolymers thereof), clay (modified/natural), fumed silica, hydrophobically-modified or surface-modified additives.

The composition or slurry of the present invention may comprise a fluidizer which is usefully incorporated into the gypsum slurry in order to minimize the water to calcined gypsum ratio. A fluidizer (also referred to as a water-reducing agent or a plasticizer) may be added to the aqueous gypsum slurry (e.g., via a pump) to increase the flow of the slurry. Some examples of such fluidizer are carboxylate compounds such as polycarboxylate ethers. Preferred additives are polycarboxylate ethers or the like.

The composition or slurry may comprise a blocking agent which is preferably incorporated into the slurry in order to stop the setting of the set hydraulic binder with water. A blocking agent is also referred to as a calcium sequestering agent and may also serve as a water-reducing agent in the aqueous gypsum slurry to increase the flow of the slurry. Any suitable product with a calcium sequestering functionality can be used. Blocking agents are typically used with and unblocking agent in a pair. Examples of typical blocking unblocking pairs are sodium polyacrylate/aluminum sulfate and sodium phosphonate/zinc sulfate.

The present invention may be practiced in the absence of fibers. In the absence of fibers means that the amount could be less than 0.01% by weight (% by weight of the weight of the set hydraulic binder), preferably less than 0.001% (only unintended impurities) and preferably no fiber will be present at all. A fiber is any fiber typically used in the art. "In the absence of fibers" does not exclude the presence of cellulosic material, especially originating from reclaim material, as is typically used in the instant field.

Advantageously, in a particular embodiment, the composition or the slurry of the present invention does not comprise fibers.

The composition of the present invention may have a volume of air voids incorporated into the composition in order to absorb sound. The quantity of air voids may come from two sources, water voids created when water of convenience is dried out of the composition and air voids that may be created when air is injected into the slurry.

The water voids may be smaller than the air voids and may have a slight contribution to sound absorption at higher frequencies and at higher water-to-plaster ratio.

The air voids may be larger than the water voids, and may tend to be interconnected which may allow the composition to absorb sound.

According to the invention, the term « porosity » means the total of the porosity induced by the presence of air voids and the porority resulting from the evaporation of water (water voids). Consequently the porosity values take into account the airs voids and the water voids.

The panel of the present invention may have
- a porosity ≥ 0.55;
- a flow resistivity between 10000 and 200000 N.s.m⁻⁴;
- a tortuosity between 1.2 and 3.4;
- a viscous characteristic length between 10 µm and 60 µm;
- a thermal characteristic length between 60 µm and 1000 µm.

Preferably, according to the panel of the present invention
- the porosity is ≥ 0.70;
- the flow resistivity is between 50000 and 180000 N.s.m⁻⁴;
- the tortuosity is between 1.3 and 2.5;
- the viscous characteristic length is between 15 µm and 50 µm;
- the thermal characteristic length is between 70 µm and 500 µm.

More preferably, according to the panel of the present invention
- the porosity is ≥ 0.76;
- the flow resistivity is between 100000 and 160000 N.s.m-4;
- the tortuosity is between 1.4 and 2.3;
- the viscous characteristic length is between 15 µm and 40 µm;
- the thermal characteristic length is between 80 µm and 300 µm.

These 5 parameters correspond to those which have been well described by the model of Biot-Johnson-Allard in the following book: J.F.Allard, Propagation of Sound in Porous Media, Elsevier Applied Science, 1993):
- porosity is as defined above; the porosity can be easily measured by picnometry;
- flow resistivity means the velocity of air volume displacement which is the material quantity that flows through an area in a time period. The resistance to air flow is equal to the pressure loss measured between the two sides of the porous sample when it is crossed by a constant laminar air flow. Flow resistivity is thus equal to the ratio of the air pressure over the flow rate times the sample surface divided by the sample thickness.
- tortuosity means the complexity of the internal structure of the material;
- thermal characteristic length characterizes the heat exchange between the air and the rigid frame. This is a measure of the effective size of the pores involved in the heat exchange. For gypsum cores, this is directly related to the bubble size.
- viscous characteristic length characterizes the viscous interaction of the air with the stiff frame. This is a measure of the effective size of the pores involved in the viscous interaction. For gypsum cores, this is directly related to the size of the interconnections between the *air voids.*

Several methods exist for the measurement of characteristic lengths and tortuosity. The most accurate way to achieve measurements consists in an analytic inversion of acoustic models. References of scientific articles describing these methods are:
- X. Olny, R. Panneton, and J. Tran-van, An indirect acoustical method for determining intrinsic parameters of porous materials. In Poromechanics II, Actes de la 2nde conférence de BIOT, 2002.

The panel of the present invention may have a density comprised between 250 and 450 kg/m³,particularly between 320 and 420 kg/m³, more particularly between 340 and 380 kg/m³, preferably 350 and 360 kg/m³, more equal to 360 kg/m³.

The panel of the present invention has sound-absorbing properties.

Thus, the invention provides a panel comprising a core, the said core comprising a composition according to the invention. This panel is a sound-absorbing panel, having a sound absorption average (SAA) of at least 0.3, preferably at least 0.5, most preferably at least 0.6 as measured by modified ASTM E1050 - 98 (see example 3 below). In particular, this panel has a compressive strength of at least 0.30 MPa as measured by modified ASTM C472. More particularly, this panel has a compressive strength of at least 0.40 MPa, preferably of at least 0.50 MPa, and more preferably of at least 0.60 MPa.

More preferably, the set gypsum plaster of sound-absorbing panel of the invention is a set flue gas desulphurization gypsum plaster (FGD).

As mentioned above for the composition and the slurry, the sound absorbing panels comprise a glycoside compound, in particular an alkylpolyglycoside or alkylpolyglucoside.

In a preferred embodiment, the sound absorbing panels comprise a C4-C16 alkylpolyglycoside or C4-C16 alkylpolyglucoside.

Preferably, the sound-absorbing panel comprises from 0.1 to 2.0 wt% glycoside compound, particularly from 0.25 to 0.8 wt% glycoside compound, more particularly from 0.30 to 0.60 wt% glycoside compound, and preferably from 0.35 to 0.50 wt% glycoside compound (% by weight of the weight of the set hydraulic binder).

By sound absorbing panels, as described above according to any embodiments of the invention, is meant in particular boards having a sound absorption average (SAA) of at least 0.3, preferably at least 0.5, most preferably at least 0.6 as measured by modified ASTM E1050 - 98 (see example 3 below).

In particular, the sound-absorbing panel of the invention has a compressive strength of at least 0.30 MPa as measured by modified ASTM C472. More particularly, the sound-absorbing panel of the invention has a compressive strength of at least 0.35 MPa, preferably of at least 0.40 MPa, and more preferably of at least 0.50 MPa.

In a particular embodiment, the sound-absorbing panel of the invention has a compressive strength of at least 0.30 MPa as measured by modified ASTM C472, and a sound absorption average of at least 0.65 as measured by modified ASTM E1050 - 98.

In a particular embodiment, the sound-absorbing panel of the invention has a compressive strength of at least 0.40 MPa as measured by modified ASTM C472, and a sound absorption average of at least 0.65 as measured by modified ASTM E1050 - 98.

In a particular embodiment, the sound-absorbing panel of the invention has a compressive strength of at least 0.50 MPa as measured by modified ASTM C472, and a sound absorption average of at least 0.65 as measured by modified ASTM E1050 - 98.

The sound-absorbing panels could include paper, reinforced joint or abutted joint. By paper it means paper used to form the facing or backing of the panel.

Another object of the invention is an acoustic insulated system comprising at least a panel according to the invention. The advantages of this system is to to improve insulating systems without the necessary use of any absorbent material inside the cavity.

By the term "system", it is understood according to the invention an assembly of at least one panel, at least one frame and at least one fixing component.

According to a first embodiment, the acoustic insulated system of the invention is a partition comprising at least one frame, at least one any known gypsum board and at least one panel comprising the composition according to the invention.

The system according to the first embodiment provides a improvement of at least 5dB expressed in R _{w + c}.

The R _{w + c} is the Weighted Sound Reduction Index, showing the ability of a wall or other building structure to provide sound insulation. The R _{w + c} has been measured in an acoustic testing laboratory according to the following method *EN ISO 140 part3 - Standard Test Method for Laboratory Measurement of Airborne Sound Transmission Loss of Building Partitions and Elements* and calculated in an acoustic testing laboratory according *EN ISO* 717 *Part1 - Rating of sound insulation in buildings and in building elements.*

According to a second embodiment, the acoustic insulated system of the invention is a partition comprising at least one frame, at least one panel, at least one gypsum board according to the invention.

According to a third embodiment, the acoustic insulated system of the invention is a partition comprising at least one stud, at least one panel, according to the invention and the said panel being airtight on one side.

A panel being airtight suitable according to the invention is a panel having a skimming coat. Such skimming coat reduces the porosity of the surface of the panel and finishes the surface rendering. The said skimming coat can be made for instance with a standard readymix compound applied at 300gr/m², like for instance the P852 from Lafarge.

By the expression "airtight", it is understood according to the invention having a flow resistivity higher than 200 001 N.s.m-4.

The frame suitable for the acoustic insulated system of the invention are all frame or studs available for partitions.

The known gypsum boards suitable for the acoustic insulated system of the invention are all known gypsum board available for partitions.

Another object of the invention is an assembly comprising at least the panel according to the invention, a coating and a fixing system.

### Process for making compositions and panels

The invention provides a process of making a sound-absorbing panel, comprising the steps of:
a) pre-mixing a set hydraulic binder with water;
b) adding a glycoside compound;
c) injecting air into the obtained slurry of step b) and mixing;
d) casting the aerated slurry;
e) setting the cast slurry.

According to the process of the invention, the set hydraulic binder could be gypsum plaster.

The glycoside compound incorporated during the step b) could be an alkylpolyglycoside or alkylpolyglucoside, in particular a C4-C16 alkylpolyglycoside or a C4-C16 alkylpolyglucoside.

The process of the invention may comprise further step(s). In particular the step a) could comprise a step of pre-mixing the set hydraulic binder with water and a blocking agent. The process of the invention could further comprise a step of introducing an unblocking agent into the aerated slurry. Alternatively, the step a) could comprise pre-mixing the set hydraulic binder with water and a retarding agent. And also, the step d) (casting of the aerated slurry) of the process according to the invention could comprise a step of depositing the aerated slurry onto a facer, said process also comprising:
- covering the deposited slurry with another facer,
- forming a ribbon from the deposited slurry, and
- cutting the ribbon into panels.

In particular, the process of the invention may comprise a step of depositing the aerated slurry into moulds.

By casting, it must be understood according to the invention, to give shape, by any means.

The invention provides two embodiments for the manufacture of panels, but is not limited thereto.

According to an embodiment hereafter referred to as the semi-batch embodiment, the panel of the present invention may be produced by mixing together, in a primary mixer, gypsum plaster, water, a fluidizer, an accelerator and a blocking agent (preferably dispersed in part or all of the gauging water). A blocked and unfoamed gypsum slurry is obtained. The slurry is continuously pumped to a secondary mixer. Prior to entry in the secondary mixer, the foaming agent (glycoside compound solution) is continuously injected into the slurry. The secondary mixer namely an air mixer (e.g. a rotating, vibrating agitator) achieves aeration and foaming of the slurry. The size of the air bubbles produced is adjusted by the speed of agitation of the secondary mixer. After the secondary mixer, the foamed slurry is passed to yet a tertiary mixer, where an unblocking agent is added at an inlet. The tertiary mixer achieves mixing of the slurry with the unblocking agent and thus the foamed slurry becomes unblocked (relative to setting). The tertiary mixer can be for example one or more static mixers, optionally with a slow rotating motion. The foamed and unblocked slurry is then deposited on a facer. A second facer may be applied to the exposed surface of the slurry and the edges glued to the first facer. The cross section of the slurry is adjusted by a forming plate and transported by a conveyor belt until the slurry is set. The continuous board is then cut to length and dried in a hot, forced air wallboard dryer that is known in the art of making gypsum wallboard to provide the final panel.

Alternatively, according to an embodiment hereafter referred to as the continuous embodiment, the panel may be produced by mixing together in a primary mixer, gypsum plaster, water, a fluidizer, a retarder and an accelerator dosed in order to retard setting of the plaster. The primary mixer is a continuous mixer. The slurry thus produced is then continuously poured into a tank from which it is pumped to a secondary mixer. The time the slurry resides in the tank is preferably small. The foaming agent (glycoside compound solution) is injected into the slurry prior to entry in the secondary mixer. The secondary mixer is an air mixer similar to the one mentioned in relation with the above semi-batch embodiment, which achieves aeration and foaming of the slurry. The foamed slurry is then directly deposited on a facer without any need for a tertiary mixer and an unblocking agent. The rest of the process is as described above in relation with the semi-batch process.

Preferably, the amount of air injected during the aeration step (according to either the first or second embodiment) is such that it permits to obtain a density of about 310 kg/m³ for the dried panel.

In either of the two processes of the invention, direct air injection can be used, as is disclosed in document US 2005/0219938.

The facer materials also named liner or paper, used to produce the panels are those that are used in the art in a conventional manner. The facer may be paper. Alternatively, the facer material may be a non-woven mat, preferably a glass mat or a mat formed of other fibers (e.g. synthetic fibers or a mixture of cellulosic fibers and synthetic fibers). The cementitious slurry may penetrate partly in the facer, fully, or the facer may even be embedded in the cementitious core.

The following steps in the process are those commonly used in the field and easily identified and implemented by the skilled person: covering the slurry with a second facer, forming a preform (by passing under a conventional wallboard forming plate), allowing the gypsum slurry to set (supported on the conveyor belt), cutting boards from the continuous ribbon of set material, inverting the boards to expose the underside of the boards, drying the boards in a wallboard dryer, optionally coating with a reinforcing binder.

Alternatively, the foamed slurry could be moulded into tiles, as is commonly practiced in the art of acoustic tile manufacturing.

The invention concerns also the product obtainable by the process according to the invention.

The following examples illustrate without limiting the invention.

### EXAMPLES

### Example 1 - production of panels according to the first embodiment of the process

In a stirred tank (primary mixer), a slurry was prepared using the following ingredients:
- 15 g of Ball milled accelerator (BMA, from the Carpentras factory, France) which comprises 50% gypsum,40% starch and 10% calcium lignosulfonate ; This BMA is prepared by co-grinding and the particule size distribution is D10=3+/-1µm, D50=15+/-3µm and D90m60+/-5µm ;

- 9.45 kg of water;
- 24 g of Coatex TP169 (polyacrylate blocking agent, obtained from Coatex);
- 15 g of Ball milled accelerator (BMA, from the Ottmarsheim factory, France) which comprises gypsum, starch and lignosulfonate;
- 35.7 g of Optima 100 (phosphonate fluidizer obtained from Chryso);
- 363 g of Vinnapas CEF52W (vinyl acetate resin obtained from Wacker).

The primary slurry thus obtained was pumped in a tube at a flow rate of 1 L/min. A solution of Glucopon 215 CS UP (containing 64% by weight of alkylpolyglycoside surfactant) obtained from Cognis, prepared with 61.1 g of Glucopon diluted in water (400g Glucopon and 600g of water) was continuously injected into the circulation tube of the primary slurry by an injection pump (flow rate: 10 g/min). The mean concentration of the active material contained in the slurry is thus 0.11%.

The primary slurry then entered a Mondomix® air mixer, [type of machine: minimondo H1776, capacity 5-50kg/hr distributed by Haas Mondomix (secondary mixer)] rotating at 450 rpm, where air was introduced at a flow rate of 1.5 L/min to 2.5 L/min so that foaming took place.

The foamed slurry was then transported to a tertiary mixer where a solution of aluminum sulfate (unblocking agent) was added and continuously mixed to the foamed slurry. The solution of aluminum sulfate was prepared with 85 g of aluminum sulfate powder, at an active content of 150 g/kg. The injection rate was 27 g/min. The tertiary mixer was a 30-cm long vertical static mixer having a 20-mm diameter, based on a Kenics® geometry. At the outlet of the mixer, the slurry was directly deposited on a liner and a second liner was applied on top of the slurry and it was allowed to set. The distance between the tertiary mixer and the liner was 10 cm.

The liner used was FF 0.55/6 supplied by Johns Manville. This liner is a non-woven glass mat of 8 µm fibers adhered together by 20 g/m² of a blend of acrylic and polyvinyl alcohol polymers. A coating of 15 to 30 g/m² of an acrylic resin binder was applied to the boards after the dryer.

### Example 2 - production of panels according to the second embodiment of the process

In a primary mixer, a powder premix was continuously introduced at a flow rate of 1 kg/min. The powder premix was composed of:
- gypsum hemi-hydrate from the Ottmarsheim factory (France) so that the water to plaster ratio is 0.58; and
- 1 g Ball milled accelerator (BMA, see above) per kg of gypsum hemihydrate.

The following liquid ingredients were also introduced into the mixer:
- 410 g/min of water;
- 57 g/min of a solution of sodium polyacrylate (Coatex TP1431EXP: fluidizing agent obtained from Coatex), the solution being a 1/10^{th} dilution of the commercial solution, so that the weight concentration in active material is 0.3% relative to the gypsum hemihydrate;
- 50 g/min of a blend of natural product with proteins in solution (Plastretard L: retarder supplied by Sicit, Vincenza Chiampo, Italy) containing 6 g per kg of the initial commercial solution;
- 50 g/min of a solution of K₂SO₄ obtained from Riedal de Haën containing 100 g per kg of active material.

The K₂SO₄ aims at providing acceleration of the final set and hardening.

The W/P ratio was 0.58. A strength reinforcement solution could be added if necessary. When a slump test was performed (with a 50-mm height and a 60-mm width ring), the diameter of the slump was between 205 and 240 mm. The setting time was comprised between 6.5 minutes and 7.5 minutes (based on the knife test), otherwise it could be adjusted by varying the quantity of Plastretard. If the Gilmore test indicated a setting time of less than 9 minutes, K₂SO₄ could be adjusted accordingly.

The slurry thus prepared exited the primary mixer and was continuously transferred to the top of a cylindrical tank having a 20 mm diameter and a 200 mm height. The slurry was then continuously pumped at the bottom of the tank at a flow rate of 1 L/min in a tube so that the amount of material in the tank remained constant. The average passing time in the tank was less than 5 seconds and the residence time distribution was narrow (95% of the slurry leaved the tank less than 10 seconds after entering the tank), as was measured by dyes concentration evolution techniques.

A solution of Glucopon 215 CS UP (containing 64% of alkylpolyglycoside surfactant) obtained from Cognis, prepared with 400 g of Glucopon and 600 g of water, was continuously injected into the circulation tube of the primary slurry by an injection pump (flow rate: 13 g/min). The concentration in active material is thus about 0.3% by weight relatively to the gypsum hemihydrate.

The primary slurry then entered a Mondomix® air mixer (secondary mixer) rotating at 300-500 rpm (400-450 rpm being preferred), where air was introduced at a flow rate of 2.5 L/min so that foaming took place. After the exit of the air mixer, the foamed slurry was deposited on a liner where it was allowed to set after the addition of a second liner on the top. The distance between the air mixer and the liner was less than 10 cm and the direction of the deposition was horizontal.

The liner used was FF 0.55/6 supplied by Johns Manville. This liner is a non-woven glass mat of 8 µm fibers adhered together by 20 g/m² of a blend of acrylic and polyvinyl alcohol polymers.

### Example 3 - Analytical tests

Samples of the foamed slurry produced according to examples 1 and 2 were taken at the outlet of the last mixer (i.e. the secondary mixer in the continuous process and the tertiary mixer in the semi-batch process).

Some samples were placed in a 20-mm high and 75-mm wide cup where they were allowed to set. These samples were used for the analysis of mechanical performances (compression test). However, it is also possible to make the analysis directly on the boards. Force-displacement curves were plotted and the strength before breaking was measured and converted to a corresponding pressure in MPa.

Other samples were placed in a 100-mm high and 45-mm wide cup where they were allowed to set. 2-cm high slices were subsequently extracted and used for the analysis of the acoustic performances of the gypsum core. Acoustics was evaluated by Kundt tube measurements, which allow to vary the frequency of the incident waves crossing a sample perpendicularly. The normal incidence measurements made in the Kundt tube were then converted to an estimation of the Sound Absorption Average (SAA) as defined in ASTM C-423, by assuming that a), the effects of 200-mm plenum between the material and the ceiling can be taken into account, and b), calculations allows to predict the real diffuse field behavior of the material from the transformation of the normal incidence results. Practical means to achieve this prediction correction can be found for instance in:
A. London, The determination of reverberant sound absorption coefficients from acoustic impedance measurements, J. Acoust. Soc. Am. 22(2), pp. 263-269, 1950.
   or in:
L. L. Beranek LL. Noise Reduction. NewYork: McGraw-Hill; 1971 (Chapter 13).

The present method was thus close to ASTM E1050-98 and is therefore termed in the present application "modified ASTM E1050-98".

The estimation of SAA is achieved on small samples when only small amounts of material are available. If the material is produced in larger amounts, SAA can be directly evaluated in an acoustic room (also named reverberating room). More precisely, a floor surface of 3600 mm by 3000 mm, with a metallic frame supported over a 200 mm plenum, was covered with 19.5 mm thick panels according to the invention supported every 600 mm. The joints over the supports were taped with 50 mm wide plastic tape. An omnidirectional loudspeaker was located in one position of the reverberating room to send a continuous spectrum in the frequency band of interest. When the sound emission stops, the sound decay was measured at eight different locations while the sound source was recorded by rotating microphones. The calculation of the equivalent absorption area is calculated from international standard ISO 354 and defined using Sabine formula: A = X (V / Tᵣ) where X is an air temperature and humidity coefficient (0.16 for standard conditions), V is the volume of the room in cubic meters, and Tᵣ is the reverberation time in seconds. The measurement of absorption area is made without (A1) and then with the specimens in place (A2). The absorption area of the room in square meters is then Al - A2. For each band of frequency, the sound absorption coefficient of the test specimen is calculated. α = (A1 - A2)/S + α₁ where α₁ is the performance of the liner alone. In the acoustic room, the panels according to the invention are necessarily covered with liners or facers, whereas the small samples are not. It is known by the experts in acoustics that the individual characterization of both the core of the panels and the liners is sufficient to calculate the acoustic behavior of the panels. Therefore, providing the acoustic characteristics of the liners are known, the SAA measured in the room and the evaluation of the SAA through the application of the "modified ASTM E1050-98" methods applied to the core and to the liner provide very close results. Therefore, SAA be evaluated either way.

The mechanical and acoustical results are presented below in Table 1. Each sample is labeled "C" for continuous process according to example 2). The quantity of air injected and thus the final density of the product is adjusted via the air mixer speed at a constant air flow for the continuous process, and via the air flow at a constant air mixer speed for the semi-batch process.

The compressive strength of the example specimens were measured according to a modified ASTM C472 method. The 75 mm round samples were de-moulded, weighed and the thickness and diameter were measured. The thickness must be at least 20 mm, and the average of 3 diameter measurements was calculated. The samples were dried in a ventilated oven at 45°C to constant weight, and cooled to 25°C in a desiccator. The samples were removed from the desiccator and placed in the center of the compressive strength press platen. The cross head is lowered onto the specimen until the load cell detects the sample and the load cell is zeroed. The force is applied at 4 mm per minute crosshead speed from initial loading through elastic failure and then to plastic failure and force falls. The force and displacement of the crosshead are recorded every 0.01 second until plastic failure of the specimen. The force and crosshead displacement are plotted to determine the force at elastic failure. For each of the samples the force that corresponds to the lowest point of the linear plastic region of the graph is taken as the elastic failure force. The force at elastic failure in Newton is divided by the area of the specimen in square millimeters and reported as compressive strength in MPa.

The porosity, the flow resistivity, the tortuosity, the thermal characteristic length and the viscous characteristic length were measured according to the following teaching:
- X. Olny, R. Panneton, and J. Tran-van, An indirect acoustical method for determining intrinsic parameters of porous materials. In Poromechanics II, Actes de la 2nde conférence de BIOT, 2002.

The results demonstrate that the invention achieves good mechanical and acoustical results at the same time.

**Table 1 - acoustical and mechanical performances of plaster board samples according to the invention made with the continuous process**

| **Sample No.** | **C1** | **C2** | **C3** |
|---|---|---|---|
| Air mixer speed (rpm) | 450 | 400 | 350 |
| Air flow (L/min) | 2.5 | 2.5 | 2.5 |
| Compressive strength (MPa) | 0.68 | 0.61 | 0.49 |
| Sound absorption average | 0.79 | 0.76 | 0.76 |
| Porosity | 0.87 | 0.89 | 0.88 |
| Flow resistivity (N.s.m-⁴⁾ | 26 100 | 64 000 | 67 900 |
| tortuosity | 1.64 | 1.75 | 1.84 |
| viscous characteristic length (µm) | 27 | 20 | 22 |
| thermal characteristic length (µm) | 231 | 251 | 143 |

## Claims

1. A sound absorbing panel with a core comprising at least
- a set gypsum plaster; and
- a glycoside compound as the sole foaming agent, and having
- a porosity ≥ 0.55;
- a flow resistivity between 10000 and 200000 N.s.m-4;
- a tortuosity between 1.2 and 3.4;
- a viscous characteristic length between 10 µm and 60 µm;
- a therm al characteristic length between 60 µm and 1000 µm ; and having
- a compressive strength of at least 0.30 MPa as measured by modified ASTM C472.

2. The panel of claim 1, wherein the glycoside com pound is alkylpolyglycoside or alkylpolyglucoside.

3. The panel of claim 2, wherein the glycoside compound is a C4-C16 alkylpolyglycoside or C4-C16 alkylpolyglucoside.

4. The panel of claim 2, wherein the panel com prises from 0.1 to 2.0 wt% of the glycoside compound, preferably from 0.25 to 8.0 wt%, more preferably from 0.30 to 0.60 wt% and more preferably from 0.35 to 0.50 wt% by weight of the set gypsum plaster.

5. The panel of claim 1, wherein
- the porosity is ≥ 0.70;
- the flow resistivity is between 50000 and 180000 N.s.m-4;
- the tortuosity is between 1.3 and 2.5;
- the viscous characteristic length is between 15 µm and 50 µm;
- the thermal characteristic length between 70 µm and 500 µm;

6. The panel of claim 1, wherein
- the porosity is ≥ 0.76;
- the flow resistivity is between 100000 and 160000 N.s.m-4;
- the tortuosity is between 1.4 and 2.3;
- the viscous characteristic length is between 15 µm and 40 µm ;
- the thermal characteristic length between 80 µm and 300 µm ;

7. The panel of claims 1 to 6, wherein fibers represent less than 0.01% by weight of the set gypsum plaster.

8. The panel of claims 1 to 7, wherein the panel has a density comprised between 250 and 450 kg/m3, particularly between 320 and 420 kg/m3, more particularly between 340 and 380 kg/m3, preferably between 350 and 360 kg/m3.

9. An assembly comprising at least the panel according to claims 1 to 8, a coating and a fixing system.

10. A partition comprising at least one frame, at least one any known gypsum board and at least one panel according to claims 1 to 8.

## Patentansprüche

1. Schallabsorbierendes Panel mit einem Kern, umfassend mindestens
- einen festgelegten Gipsputz; und
- eine Glykosidverbindung als einziges Schäummittel, und mit
- einer Porosität ≥ 0,55;
- einem spezifischen Strömungswiderstand zwischen 10000 und 200000 N.s.m-4;
- einer Tortuosität zwischen 1,2 und 3,4;
- einer charakteristischen viskosen Länge zwischen 10 µm und 60 µm;
- einer charakteristischen thermischen Länge zwischen 60 µm und 1000 µm, und mit
- einer Druckfestigkeit von mindestens 0,30 MPa, gemessen nach modifiziertem ASTM C472.

2. Panel nach Anspruch 1, wobei die Glykosidverbindung Alkylpolyglykosid oder Alkylpolyglukosid ist.

3. Panel nach Anspruch 2, wobei die Glykosidverbindung ein C4-C16-Alkylpolyglykosid oder C4-C16-Alkylpolyglukosid ist.

4. Panel nach Anspruch 2, wobei der Panel von 0,1 bis 2,0 Gew.-% der Glykosidverbindung, vorzugsweise von 0,25 bis 8,0 Gew.-%, stärker bevorzugt von 0,3 bis 0,60 Gew.-% und noch stärker bevorzugt von 0,35 bis 0,50 Gew. -% des festgelegten Gipsputzes umfasst.

5. Panel nach Anspruch 1, wobei
- die Porosität ≥ 0,70 beträgt;
- der spezifische Strömungswiderstand zwischen 50000 und
- 180000 N.s.m-4 liegt;
- die Tortuosität zwischen 1,3 und 2,5 liegt;
- die charakteristische viskose Länge zwischen 15 µm und 50 µm liegt;
- die charakteristische thermische Länge zwischen 70 µm und 500 µm liegt.

6. Panel nach Anspruch 1, wobei
- die Porosität ≥ 0,76 beträgt;
- der spezifische Strömungswiderstand zwischen 100000 und
- 160000 N.s.m-4 liegt;
- die Tortuosität zwischen 1,4 und 2,3 liegt;
- die charakteristische viskose Länge zwischen 15 µm und 40 µm liegt;
- die charakteristische thermische Länge zwischen 80 µm und 300 µm liegt.

7. Panel nach den Ansprüchen 1 bis 6, wobei Fasern weniger als 0,01 Gew.-% des festgelegten Gipsputzes ausmachen.

8. Panel nach den Ansprüchen 1 bis 7, wobei der Panel eine Dichte aufweist, die zwischen 250 und 450 kg/m3, vorzugsweise zwischen 320 und 420 kg/m3, stärker bevorzugt zwischen 340 und 380 kg/m3, vorzugsweise zwischen 350 und 360 kg/m3 umfasst.

9. Anordnung, umfassend wenigstens den Panel nach den Ansprüchen 1 bis 8, eine Beschichtung und ein Befestigungssystem.

10. Partition, umfassend wenigstens einen Rahmen, wenigstens irgendeine bekannte Gipsplatte und wenigstens einen Panel nach den Ansprüchen 1 bis 8.

## Revendications

1. Panneau absorbant le son avec un noyau comprenant au moins :
- un plâtre de gypse durci ; et
- un composé de glycoside comme seul agent moussant,
et ayant :
- une porosité ≥ 0,55 ;
- une résistance hydraulique spécifique entre 10 000 et 200 000 N.s.m⁻⁴;
- une tortuosité entre 1,2 et 3,4 ;
- une longueur caractéristique visqueuse entre 10 µm et 60 µm ;
- une longueur caractéristique thermique entre 60 µm et 1000 µm ;
et ayant :
- une résistance à la compression d'au moins 0,30 MPa comme mesurée par la norme ASTM C472 modifiée.

2. Panneau selon la revendication 1, dans lequel le composé de glycoside est formé d'alkylpolyglycoside ou d'alkylpolyglucoside.

3. Panneau selon la revendication 2, dans lequel le composé de glycoside est un alkylpolyglycoside en C₄-C₁₆ ou un alkylpolyglucoside en C₄-C₁₆.

4. Panneau selon la revendication 2, dans lequel le panneau comprend 0,1 à 2,0 % en poids du composé de glycoside, de préférence 0,25 à 8,0 % en poids, mieux encore 0,30 à 0,60 % en poids, bien mieux encore 0,35 à 0,50 % en poids du plâtre de gypse durci.

5. Panneau selon la revendication 1, dans lequel :
- la porosité est ≥ 0,70 ;
- la résistance hydraulique spécifique se situe entre 50 000 et 180 000 N.s.m-4 ;
- la tortuosité se situe entre 1,3 et 2,5 ;
- la longueur caractéristique visqueuse se situe entre 15 µm et 50 µm ; et
- la longueur caractéristique thermique se situe entre 70 µm et 500 µm.

6. Panneau selon la revendication 1, dans lequel :
- la porosité est ≥ 0,76 ;
- la résistance hydraulique spécifique se situe entre 100 000 et 160 000 N.s.m⁻⁴ ;
- la tortuosité se situe entre 1,4 et 2,3 ;
- la longueur caractéristique visqueuse se situe entre 15 µm et 40 µm ; et
- la longueur caractéristique thermique se situe entre 80 µm et 300 µm.

7. Panneau selon les revendications 1 à 6, dans lequel les fibres représentent moins de 0,01 % en poids du plâtre de gypse durci.

8. Panneau selon les revendications 1 à 7, dans lequel le panneau a une masse volumique comprise entre 250 et 450 kg/m³, en particulier entre 320 et 420 kg/m³, plus particulièrement entre 340 et 380 kg/m³, de préférence entre 350 et 360 kg/m³.

9. Ensemble comprenant au moins le panneau selon les revendications 1 à 8, un revêtement et un système de fixation.

10. Cloison comprenant au moins un châssis, au moins une plaque de gypse connu quelconque et au moins un panneau selon les revendications 1 à 8.
